(19) Europäisches Patentamt
European Patent Office
Office européen des brevets

(11) EP 1 550 855 A2

(12) **EUROPEAN PATENT APPLICATION**

(43) Date of publication:
**06.07.2005 Bulletin 2005/27**

(51) Int Cl.[7]: **G01N 21/35**, G01N 21/55

(21) Application number: **04257949.0**

(22) Date of filing: **18.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.12.2003 US 533433 P**

(71) Applicant: **Rohm and Haas Company**
**Philadelphia, Pennsylvania 19106-2399 (US)**

(72) Inventors:
- **Laughlin, Kenneth Bruce**
**Maple Glen, Pennsylvania 19002 (US)**
- **Semmes, David Haynes**
**North Port, New York 11768 (US)**
- **Yuan, Haojie**
**Dresher, Pennsylvania 19025 (US)**

(74) Representative: **Buckley, Guy Julian**
**ROHM AND HAAS (UK) LTD.**
**European Patent Department**
**28th Floor, City Point**
**One Ropemaker Street**
**London EC2Y 9HS (GB)**

(54) **Method for detecting contaminants**

(57) An effective, accurate and reliable spectroscopic method for detecting differences in composition of chemical samples as compared to corresponding standards is described. The method is based on a set match scores covering a plurality of spectral regions. The method allows a user to determine if a sample matches its corresponding standard by evaluating if the match scores are comparable to previously measured standard values.

FIG. 1

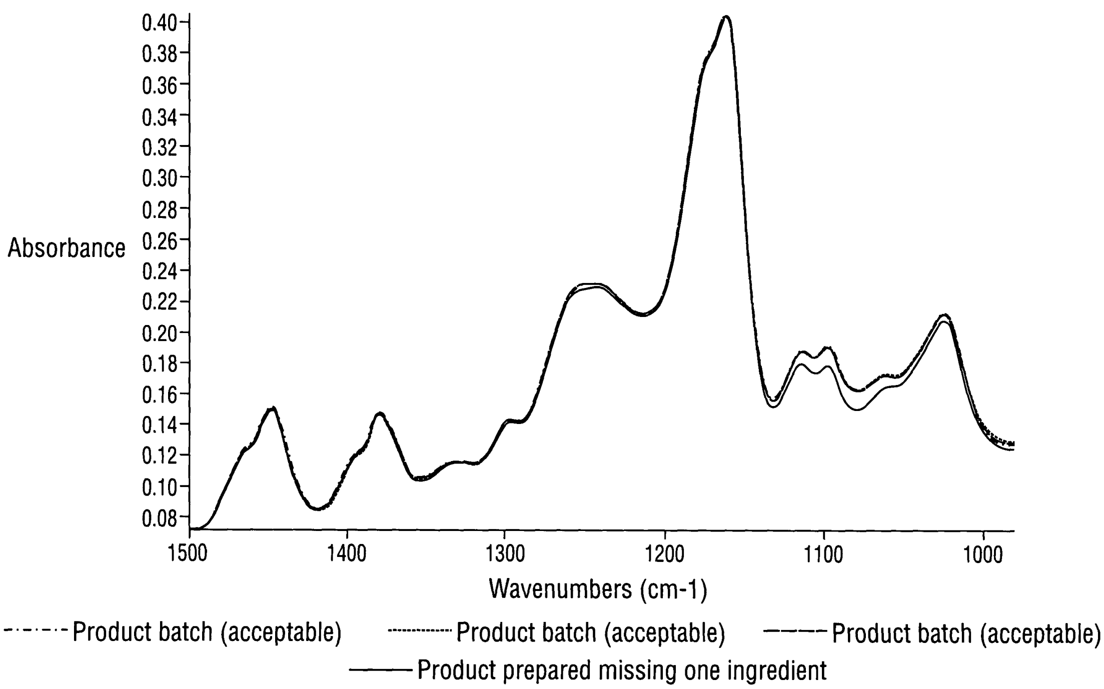




Printed by Jouve, 75001 PARIS (FR)

## Description

The present invention relates to methods for evaluating quality control in chemical manufacturing processes. More particularly, the invention is directed to a spectroscopic method for detecting differences in composition, using a set of match scores to evaluate the closeness of a sample to its corresponding standard. The method is useful for analyzing any raw materials, products and by-products associated with any chemical manufacturing processes.

In any chemical manufacturing process, reliable detection of an incorrect product or a contaminated finished product is of critical concern to the manufacturer. For example, there are a number of problems associated with the manufacture of emulsion polymers which include, but are not limited to for example, incorrect polymer products, mislabeled products, contaminated polymer products, contaminated raw materials, raw materials mischarges, mischarges of one or more monomers, incorrect weight percent polymer solids, incorrect degree of neutralization, mischarges of reagents and minor additives and combinations thereof. Any method for detecting differences in composition between one or more samples and their respective standards must be reliable and sufficiently easy to operate by laboratory, technical and plant personnel.

One particularly difficult problem in the manufacture of chemical products, including emulsion polymers, is to reliably detect and easily distinguish, using spectroscopic methods, pure products as compared to products having small to large differences in chemical composition as a result of a number of factors including, for example, one or more contaminants. Fourier Transform Infrared (FT-IR) spectroscopy is one method used to analyze compositional differences in a sample as compare to its corresponding standard. However, match scores used in the analysis are based only on one spectral region, which leads to a number of difficulties in accurately and reliably detecting chemical differences in composition. Namely, spectral changes in one portion of the spectrum when other portions of the spectrum vary significantly. Principle component analysis (PCA) is another method which is widely used to identify unusual spectra. With this method, a set of spectra are represented as a linear combination of component spectra (*i. e*. the principle components). A spectrum is identified as unusual (also referred to as a spectrum that is different from a set of standard or normal spectra) based on either or both of two criteria, namely a set of coefficients outside the ranges observed and measured for standard spectra and/or a poor fit of the sample as compared to its corresponding standard spectra (also referred to as a high spectral residual). Unfortunately, setting up a method for detecting compositional differences based on PCA requires many measured parameters for success (*vide infra*), requires expert knowledge of the specific sample and standard, is not a rapid method of analysis, and requires calibration which involves choosing numbers of specific factors and an algorithm to decide the limits upon spectral residuals and match scores for determining the absence (pass) and presence (fail) of compositional differences in the sample. It is desirable, therefore, to provide a spectroscopic method for detecting differences in composition of samples of raw materials, products and by-products associated with any chemical manufacturing process that does not have the inherent limitations of the methods described. A desirable method includes using a set of match scores to evaluate the closeness of the sample to the standard, based on a plurality of spectral regions. It is also desirable that the method uses conventional spectroscopic equipment and that the method includes analysis of multiple spectral regions to enhance selectivity and reliability in detecting compositional differences.

Inventors have discovered a surprisingly effective and reliable spectroscopic method for detecting differences in composition for any sample as compared to its corresponding standard. The method includes using a set of match scores to evaluate the closeness of any sample to its corresponding standard, based on a plurality of spectral regions. The analysis of spectra is completely automated. Match scores are calculated between a sample spectrum and a corresponding standard spectrum using a large plurality of sub-regions which are selected to cover different portions of the whole spectrum of the sample and the standard. Use of match scores for multiple spectral regions provides detection of spectral changes in one portion of the spectrum with good sensitivity when other portions of the spectrum vary significantly. If match scores are high enough, there is high correlation between the sample and its corresponding standard. The method provides effective and reliable quality control (QC) and is especially useful in chemical manufacturing facilities and plants, which routinely prepare a plurality of batches of a particular product.

Accordingly, the invention provides a method for detecting differences in chemical composition between one or more samples as compared to its corresponding standards comprising the steps of:

(a) measuring spectra for one or more samples and its corresponding standards; and
(b) calculating a set of match scores for each sample based on comparison of the spectrum of a specific sample and its corresponding standard spectrum, wherein each match score is calculated from a different spectral region; and
(c) comparing match scores.

According to one embodiment, the method uses FT-IR spectroscopy and the match scores are presented in the form of a control chart. According to a separate embodiment, spectra of each corresponding standard is stored in a spectral library (also referred to as a spectral database).

The invention also provides an automated method for detecting differences in chemical composition between one or more samples as compared to its corresponding standards.

The invention provides also provides a method for detecting differences in chemical composition between one or more samples as compared to its corresponding standards comprising the step of: combining the method of the invention with principle component analysis.

As used herein, a sample is provided and analyzed from any stage of a chemical manufacturing process and refers to any composition of matter related to the process. Typical samples include, but are not limited to, raw materials, reactants, additives, intermediates, by-products, and products. A standard (also referred to as a reference) refers to the corresponding chemical substance the sample is compared against. One example of a typical standard is a pure or commercially available chemical product, whose spectrum is stored in a database (referred to as a spectral library). The standard is compared with the corresponding spectra of one or more samples of the product runs (also referred to as batches) prepared from its specific chemical manufacturing process. Another example of a standard is a pure or commercially available reactant used to prepare a chemical product, which is compared with its corresponding reactant samples.

Any spectroscopic method is usefully employed in accordance with the invention. Suitable spectroscopic methods include, but are not limited to for example, near infrared (IR) spectroscopy, mid IR spectroscopy, far IR spectroscopy, surface IR spectroscopy, X-ray spectroscopy, Raman spectroscopy, ultraviolet-visible (UV-vis) spectroscopy, optical spectroscopy, acoustic spectroscopy, ellipsommetry, nuclear magnetic resonance spectroscopy (NMR), magnetic resonance spectroscopy (MRS), mass spectrometry (MS), gas chromatography, liquid chromatography, solid chromatography and combinations thereof.

Sample spectra are measured using any conventional and/or commercially available instruments and hardware to hold the sample. When FT-IR spectroscopy is used according to the invention, samples are measured using hardware including, but not limited to for example, a cuvette, a plastic form (used for films and liquids) and a diamond attenuated total reflectance (ATR) accessory. When UV-vis spectroscopy is used, the hardware employed for holding the sample and standards is, for example, a cuvette. For NMR spectroscopy, the hardware used to hold the samples and standards is a quartz tube.

According to one embodiment of the invention, Fourier Transform infrared (FT-IR) spectra of samples are measured using a diamond attenuated total reflectance (ATR) accessory (a 3-bounce model DurasamplIR™, available formerly from SensIR™ technologies, now available from Smiths Detection). Any conventional IR spectrometers, including FT-IR spectrometers, are usefully employed in accordance with the invention. Suitable FT-IR spectrometers include, but are not limited to for example, those available from Mattson™ Instruments: Mattson Genesis I™, Mattson Genesis II™, Mattson Galaxy™; Nicolet™ Corporation, Nicolet Avatar™ and Thermoelectron™ instruments. An automated computer program is used to collect FT-IR spectra (OMNIC™ macro) of both samples and corresponding standards. The standard spectra are stored in a spectral library for automatic retrieval and comparison with each respective sample spectrum measured, analyzed and evaluated. Any suitable computer program is used in accordance with the invention. One suitable program includes, but is not limited to for example, a visual basic program. The computer program is used to calculate a match score for each sample and its corresponding standard for comparison. The program is a copyrighted program developed by Rohm and Haas™ Company. Match scores are used for simplicity in comparing a sample spectrum with its corresponding standard spectrum. A different computer program (an Excel™ macro) is used to control chart the match scores (see Examples), determine pass/fail of each sample compared to its corresponding standard and to display, including store, each result.

Match scores are calculated by a number of well known algorithms, including, but not limited to for example, the four algorithms shown below. In each case, the calculated value provides a quantitative measure of similarity between two spectra. For example, with the Correlation Coefficient, a value of 1 indicates a perfect match, while imperfect matches yield values less than 1.

$$\text{"Correlation"} \quad \frac{\Sigma_{i=1}^{N} (\mathrm{Unkn}_i - \mathrm{Unkn}_{ave}) * (\mathrm{Lib}_i - \mathrm{Lib}_{ave})^2}{(\Sigma_{i=1}^{N} (\mathrm{Unkn}_i - \mathrm{Unkn}_{ave})^2 * \Sigma_{i=1}^{N} (\mathrm{Lib}_i - \mathrm{Lib}_{ave})^2)^{0.5}}$$

$$\text{"Euclidean Distance"} \quad \sqrt{2 * \sqrt{1 - \frac{\sum_{i=1}^{N} (\mathrm{Unkn}_i * \mathrm{Lib}_i)}{\sum_{i=1}^{N} (\mathrm{Unkn}_i)^2 * \sum_{i=1}^{N} (\mathrm{Lib}_i)^2}}}$$

$$\text{Least Squares} \qquad \Sigma_{i=1}^{N} (Unkn_i - Lib_i)^2/N$$

$$\text{Absolute Value} \qquad \Sigma_{i=1}^{N} |Unkn_i - Lib_i|/N$$

For these (and other) algorithms, the spectrum is represented as an array of N absorbance values over the subregion of interest. The spectrum of the sample to be analyzed is referred to as an "Unknown", while the spectrum to which it is being compared is referred to as "Library", namely one of a plurality of spectra in a spectral library or database.

According to an exemplary embodiment, a typical FT-IR spectrum is measured with a frequency range from 400-4000 $cm^{-1}$ with a data point spacing of 2 $cm^{-1}$, and the resulting the array has 1801 data points. If the match score is calculated over the region from 1000-1100 $cm^{-1}$, then the data array used for the calculation would have N=51 data points as follows:

| Number of subregions, i | Frequency $\nu_i$ (cm-1) | Example absorbance at frequency $\nu_i$ (either $Unkn_i$ or $Lib_i$) |
|---|---|---|
| 1 | 1000 | 0.50 |
| 2 | 1002 | 0.51 |
| 3 | 1004 | 0.48 |
| . | . | . |
| . | . | . |
| . | . | . |
| 50 | 1098 | 0.15 |
| 51 | 1110 | 0.12 |

The average absorbance values $Unkn_{ave}$ or $Lib_{ave}$ are simply the average of all of the absorbance values over the subregion of interest.

There are a number of advantages of the using the method of the invention. By using more than one spectral subregion in the method of the invention, a significant increase in the sensitivity is provided, which is reflected in a reliable and more accurate pass/fail determination. Moreover, spectral variations outside the subregions do not affect the scores of normal measurements. Thus, any spectral (and compositional) changes due to one or more contaminants for example absorbing strongly in this subregion will cause a greater drop in the match score relative to normal variability associated with the measurement. Infrared spectroscopy, including FT-IR spectroscopy, is a universal techniques for analyzing chemical composition. Conventional FT-IR equipment are used, which are durable, reliable equipment to use in a chemical plant environment. The method is easy to use and can be rapidly applied and implemented, especially by persons having no skill in chemical composition analysis. The chemical, computer and spectroscopic hardware and software is quickly setup and implemented for use. The method is sensitive enough to effective detect changes in chemical composition between a sample and its corresponding standard, including changes due to contamination. The pass/fail limit is adjustable to achieve the required sensitivity for analysis and evaluation of each sample. The method is an excellent means of evaluating QC for a chemical product and is universally used for all types of chemical samples.

Any number of subregions can be used to calculate match scores according to the method of the invention. Typically, the number of subregions is determined from potentially useful regions of a spectra used for analysis in the method. For example, using mid IR spectroscopy, between 2 and 100 subregions are used. Setting pass/fail (P/F) limits for sample is a heuristically determined parameter. According to one embodiment, P/F limits are based on historically measured variability of the match scores. Pass/fail limits are determined when statistically different match scores are calculated for a sample as compared to its corresponding standard. Suitable pass/fail limits include, but are not limited to for example, between three times the standard deviation ($3\sigma$) and $30\sigma$. For example, P/F limits are displayed in the form of a control chart (see Examples). According to one embodiment of the invention, the pass/fail limit is based on a non-Gaussian match score distribution. According to a separate embodiment, the pass/fail limit is based on a Gaussian match score distribution.

One advantage of the match scores approach of the invention over PCA is the speed and ease of implementation of the match scores approach. To implement the method of the invention using match scores, a spectrum of standard material is measured (called the library spectrum). Then, spectra of several samples (typically 4 samples) of reference material are measured, and the software tabulates the match scores. An unknown sample is then tested immediately, since pass/fail limits on match scores are based on the average and standard deviation in the scores of the standard. With the FT-IR method described here, the total time to begin testing a new product is approximately 20 minutes, where the method is set up as the sample spectra are measured.

Developing a PCA method, however, requires considerably more time and expertise. The user collects a set of spectra which represent normal variability in the measurements, performs a PCA calibration which involves choosing parameters for the fit, and then chooses other parameters for the algorithms used to decide the range of coefficients and/or limits for spectral residuals for a sample to be considered normal. Despite the likely possibility software could be developed to define these parameters automatically, the choice of parameters typically involves more expert judgment as compared the match scores analysis used in the invention.

The method if the invention is useful for detecting differences in composition of any composition of matter in a sample as compared to its corresponding standard that result from one or more problems associated with the manufacture of chemical products, including emulsion polymers, which include, but are not limited to for example, incorrect polymer products, mislabeled products, contaminated polymer products, contaminated raw materials, raw materials mischarges (incorrect exchange of one or more raw materials for another), mischarges of one or more monomers (incorrect exchange of one or more monomers for another), incorrect weight percent polymer solids, incorrect degree of neutralization, mischarges of reagents and minor additives and combinations thereof. Any method for detecting differences in composition between one or more samples and their respective standards must be reliable and sufficiently easy to operate by laboratory, technical and plant personnel.

According to one embodiment of the invention, the FT-IR method of the invention is a useful quality control test of products prepared in batch quantities from a specific chemical manufacturing process. The method verifies the composition of the product compared to reference standards to confirm quality of the product or to detect any changes in chemical composition of a sample related to contaminants and other problems associated with the process. The method is complementary to other conventional quality control tests of the product.

For example, the FT-IR method is used as a quality control test to check emulsion products for consistency of chemical composition. In many instances the emulsion product batches pass the quality control test. The term pass refers to the fact that FT-IR spectra of sample batches consistently correlates (based on match scores) with its corresponding standard spectra as observed when the respective spectra are compared and the match scores are calculated.

While the method of the present invention has certain advantages over PCA, PCA is also usefully employed in accordance with the present invention to provide an alternative yet useful, novel and distinct method of detecting contaminants. One advantage is that gains in sensitivity over full spectrum PCA are realized by focusing on subregions of one or more contaminants since the contaminant spectrum dominates relative to noise.

According to a separate embodiment, the method of the invention is combined with PCA using multiple spectral subregions. The combination method has utility and advantages resulting from the simultaneous use of multiple subregions as described earlier. PCA is designed to determine outliers in the presence of significant spectral variation, and therefore has utility and advantages as compared to using match scores in certain cases where substantial spectral variability is present. However, it is quite possible that some of the variation is not modeled well when generating the calibration. The presence of unmodeled variability will compromise the ability to detect outliers. If spectral subregions are used, then a different PCA model would be built for each subregion. Spectral variability would not be detrimental to sensitivity if it occurs outside the spectral subregion where the model is built. By using multiple subregions, the probability is enhanced that one of the subregions will successfully ignore unmodeled variability and focus on an unusual compositional change between a sample as compared to its corresponding standard.

According to a separate embodiment, an alternative method detecting one or more contaminants comprises PCA combined with Mahalanobis distance analysis. As noted earlier, one advantage of using spectral subregions is also found using a combination of the method of the invention and Principal Components Analysis. Mahalanobis distance is a metric often used to classify spectra into groups. By using a narrow spectral region, the Mahalanobis distance from normal samples to the sample prepared with one ingredient missing is increased significantly.

According to a separate embodiment, an alternative method detecting one or more contaminants comprises PCA combined with spectral residuals analysis. A fit spectrum indicates no contaminants and exhibits low to no spectral residuals. An unfitted spectrum indicates one or more contaminants and exhibits large spectral residuals.

Any composition of matter, including chemical products and industrial polymers for example, is analyzed using the method of the invention. Suitable chemical products and industrial polymers analyzed using the method of the invention include, but are not limited to, vinyl polymers such as polystyrene, polystyrene copolymers polyvinylacetate, polyvinylpyridines, polyvinylamines, polyvinylamides, polyvinyl ethers, condensation polymers such as polyesters and polyurethanes, polyethylenically unsaturated polymers such as polyethylene, polypropylene, poly(meth)acrylates, poly(meth)acrylate copolymers, polyalkyl(meth)acylates, polyalkyl(meth)acrylate copolymers, polyhydroxyakyl(meth)acrylates, polyacrylonitrile, polyacrylonitrile copolymers, polyacrylamide, poly(meth)acrylamide and poly(meth)acrylamide copolymers. Other suitable examples of water insoluble polymers include cross-linked polymers of the polymers listed.

Water insoluble acrylic polymers useful in the invention are prepared by conventional polymerization techniques including sequential emulsion polymerization. Dispersions of the latex polymer particles are prepared according to processes including those disclosed in U.S. Patent Nos. 4,427,836; 4,469,825; 4,594,363; 4,677,003; 4,920,160; and 4,970,241. The latex polymer particles may also be prepared, for example, by polymerization techniques disclosed in European Patent Applications EP 0 267 726; EP 0 331 421; EP 0 915 108 and U.S. Patent Nos. 4,910,229; 5,157,084; 5,663,213 and 6,384,104.

As used herein, the term "(meth)acrylic" refers to either the corresponding acrylic or methacrylic acid and derivatives; similarly, the term "alkyl (meth)acrylate" refers to either the corresponding acrylate or methacrylate ester.

Some embodiments of the invention are described in detail in the following Examples. The example is representative of any sample measured in accordance with invention and the method of the invention.

Examples

An example showing the advantage of using match scores of spectral subregions to enhance sensitivity is presented in Figure 1. In this case, a spectral subregion (#1) around 1080 cm-1 is most sensitive because of the strong IR peak at this frequency. In a general case, the compositional difference can not be predicted, and the optimal spectral subregion is unknown. By using many spectral subregions, it is likely that one of them will be nearly optimal. The example also illustrates how the normal variation of the match scores are used to determine the pass/fail limits. The limits are defined such that the score must drop well below the range which is normally found in order for the sample to fail. Control chart of match scores of the entire fingerprint region (#1, 650-1800 cm-1) are summarized in Figure 2. The last data point is for product prepared with one ingredient missing. The drop in match score relative to the normal variation is much less than observed with the subregion 1050-1110 cm-1, shown below.

One advantage of using match scores of spectral subregions to enhance sensitivity is presented in Figure 3. The example illustrates how variability reduces the match scores of normal (standard) batches for a broad subregion, and partially obscures the spectral differences in the spectrum of the sample having a missing ingredient (red) at 1080 $cm^{-1}$. Control chart of match scores for subregion # 50 (1050-1110 cm-1), as summarized in Figure 4. The last data point is for a product prepared with one ingredient missing. The drop in match score relative to the normal variation is much larger for this subregion than for match scores of the entire fingerprint region, because the region is focused where the spectrum of the missing material has a strong absorption peak.

Moreover, the advantage of using match scores of spectral subregions to enhance sensitivity is presented in Figures 5. By focusing in on a different subregion, (# 58) where the missing ingredient absorbs strongly, the spectral (and hence compostional) difference is magnified. A control chart of match scores for subregion #58 (1450-1510 cm-1) is summarized in Figure 6. The last data point is for product prepared with one ingredient missing. Not surprisingly, this spectral subregion is not useful for detecting the missing ingredient, because the spectrum of the missing material has very little absorption of here.

Figure 7 shows the Mahalanobis distance from each sample spectrum to normal product calculating using Principal Components Analysis. The spectra used for the calculation are identical to the spectra used for Figures 1-6. The software package TQAnalyst™ from Thermo Incorporated™ is used for the analysis. The data analysis was carried out two different ways using identical parameters except for the spectral region chosen. Five principal components were chosen for the analysis. The data shown in blue was calculated using the entire fingerprint region from 650-1800 cm-1, while the yellow data was calculated using a narrower region from 1050-1110 cm-1 where the missing ingredient absorbs strongly. The last data point corresponds to the sample prepared with one ingredient missing. The Mahalanobis distance of the spectrum with missing ingredient from normal data is nearly three times as large using the narrow subregion from 1050-1110 cm-1 (distance/average = 14.6) compared to the broad region from 650-1800 cm-1 (distance/average = 5.3).

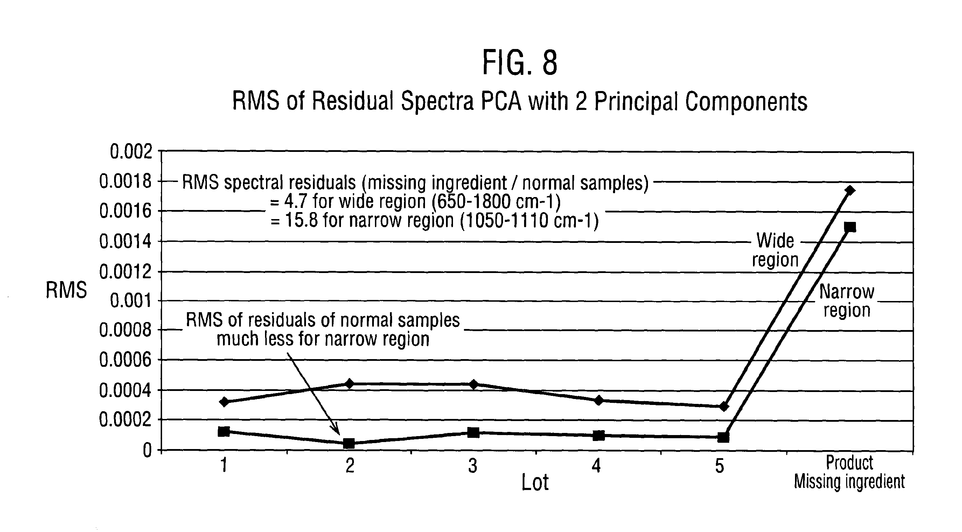

Spectral residuals from PCA analysis were also examined with wide and narrow regions. Figure 8 below shows the root mean square (RMS) of spectral residuals from a PCA analysis using two principal components for 5 normal samples and the sample prepared with the missing ingredient. The RMS spectral residual of the sample prepared with the ingredient missing is 15.8 times higher than for normal samples when the narrow subregion is used, whereas the RMS residual is only 4.7 times higher than for normal samples when the wide subregion is used.

LIST OF FIGURES

Figure 1. Overlay of infrared spectra of three normal batches of a product along with a sample which was prepared with one ingredient missing. The spectra are displayed from 980-1500 cm-1 and are autoscaled in the Y-axis (absorbance). The red spectrum has a lower absorbance at ~1080 cm-1, where the missing ingredient absorbs strongly.

Figure 2. Control chart of match scores of the entire fingerprint region (650-1800 cm-1). Last data point is for product prepared with one ingredient missing. Drop in match score relative to the normal variation is much less than observed with the subregion 1050-1110 cm-1, shown below.

Figure 3. Overlay of infrared spectra of three normal batches of a product along with a sample which was produced with one ingredient missing. The spectra are displayed from 850-1820 cm-1 and are autoscaled in the Y-axis (absorbance). The three reference spectra show much more variation in this plot, primarily due to differences in water absorbance around 1641 cm-1. This variability reduces the match scores of normal batches for the broad subregion, and partially obscures the spectral difference in the red spectrum at ~1080 cm-1.

Figure 4. Control chart of match scores for subregion (1050-1110 cm-1). Last data point is for sample prepared with one ingredient missing. Drop in match score relative to the normal variation is much larger for this subregion than for match scores of the entire fingerprint region, because the region is focused where the spectrum of the missing material has a strong absorption peak.

Figure 5. Overlay of infrared spectra of three normal batches of a product along with a sample which was prepared with one ingredient missing. The spectra are displayed from 1050-1110 cm-1 and are autoscaled in the Y-axis (absorbance). By focusing in on this subregion, where the missing ingredient absorbs strongly, the spectral difference is magnified.

Figure 6. Control chart of match scores for subregion (1450-1510 cm-1). Last data point is for sample prepared with one ingredient missing. Not surprisingly, this spectral subregion is not useful for detecting the missing ingredient, because the spectrum of the missing material has very little absorption of here.

Figure 7. Mahalanobis distance calculation by Principal Components Analysis using entire fingerprint region (650-1800 cm-1) vs. narrow subregion (1050-1100 cm-1). The last point is for sample prepared with one ingredient missing. The distance of the sample with the missing ingredient is more than twice as large using the narrow subregion.

Figure 8. Root mean square of spectral residuals from a PCA analysis using two principal components for 5 normal batches and a sample prepared with one missing ingredient.

## Claims

**1.** A method for detecting differences in chemical composition between one or more samples as compared to its corresponding standards comprising the steps of:

(a) measuring spectra for one or more samples and its corresponding standards; and
(b) calculating a set of match scores for each sample based on comparison of the spectrum of a specific sample and its corresponding standard spectrum, wherein each match score is calculated from a different spectral region; and
(c) comparing match scores.

**2.** The method according to claim 1, wherein differences in chemical composition are due to factors selected from the group consisting of contaminants, mislabeled products, products contaminated with one or more other products, monomer mischarges, raw material mischarges, incorrect weight percentage of polymer product solids, incorrect degree of neutralization, mischarge of an additives including solvents, base, soaps, surfactants and other additives and combinations thereof.

**3.** The method according to claim 1, wherein Fourier transform infrared spectra of samples and corresponding standards are measured and standard spectra are stored and retrieved for comparison from a spectral library.

**4.** The method according to claim 1, wherein a computer program is used to calculate a set of match scores for each sample and its corresponding standard and the match scores are presented in the form of a control chart.

5. The method according to claim 1, wherein each step is automated.

6. The method according to claim 1, wherein Fourier transform infrared spectra of samples and corresponding standards are measured using a diamond attenuated total reflectance (ATR) accessory.

7. A method of evaluating quality control for any manufactured chemical product using the method of claim 1.

8. A method for detecting differences in chemical composition between one or more samples as compared to its corresponding standards comprising the step of: combining the method of claim 1 with principle component analysis.

9. The method according to claim 1, wherein Fourier transform infrared spectra of samples and corresponding standards are measured.

10. The method according to claim 1, wherein multiple spectral subregions are used.

FIG. 1

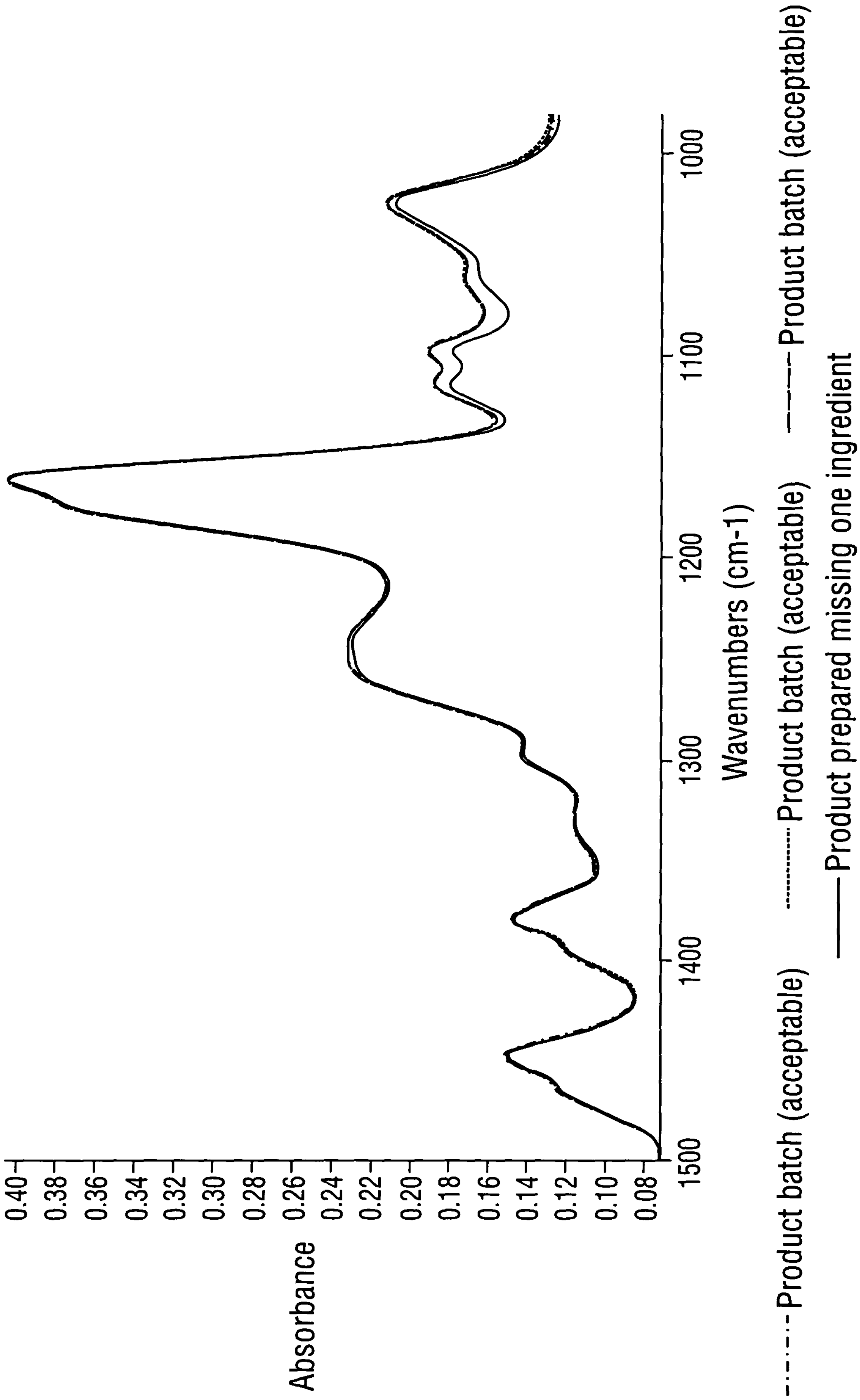
Absorbance
0.40
0.38
0.36
0.34
0.32
0.30
0.28
0.26
0.24
0.22
0.20
0.18
0.16
0.14
0.12
0.10
0.08
1500
1400
1300
1200
1100
1000
Wavenumbers (cm-1)
Product batch (acceptable)
Product batch (acceptable)
Product batch (acceptable)
Product prepared missing one ingredient

FIG. 2

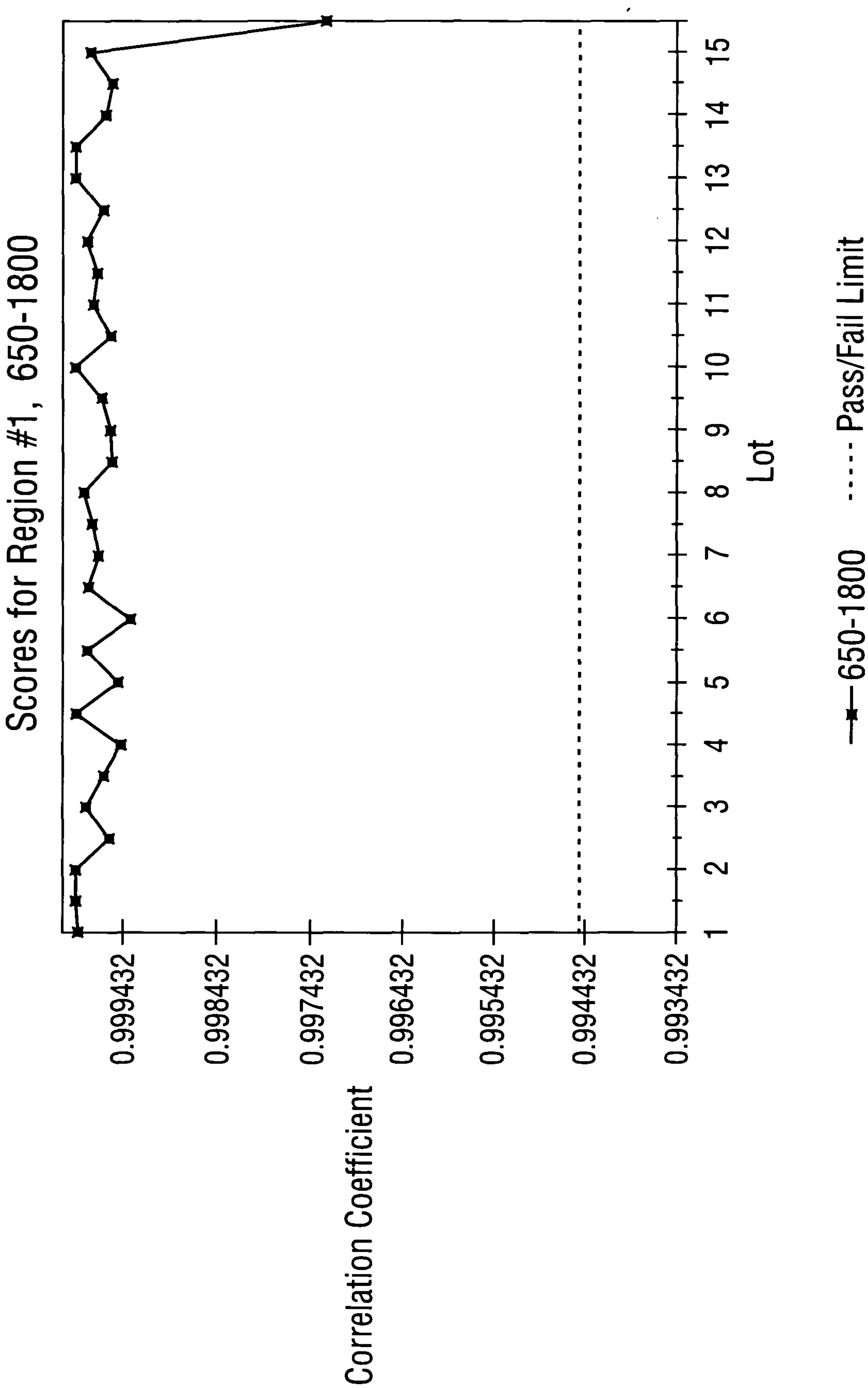
Scores for Region #1, 650-1800
Correlation Coefficient
0.999432
0.998432
0.997432
0.996432
0.995432
0.994432
0.993432
Lot
1
2
3
4
5
6
7
8
9
10
11
12
13
14
15
650-1800
Pass/Fail Limit

FIG. 3

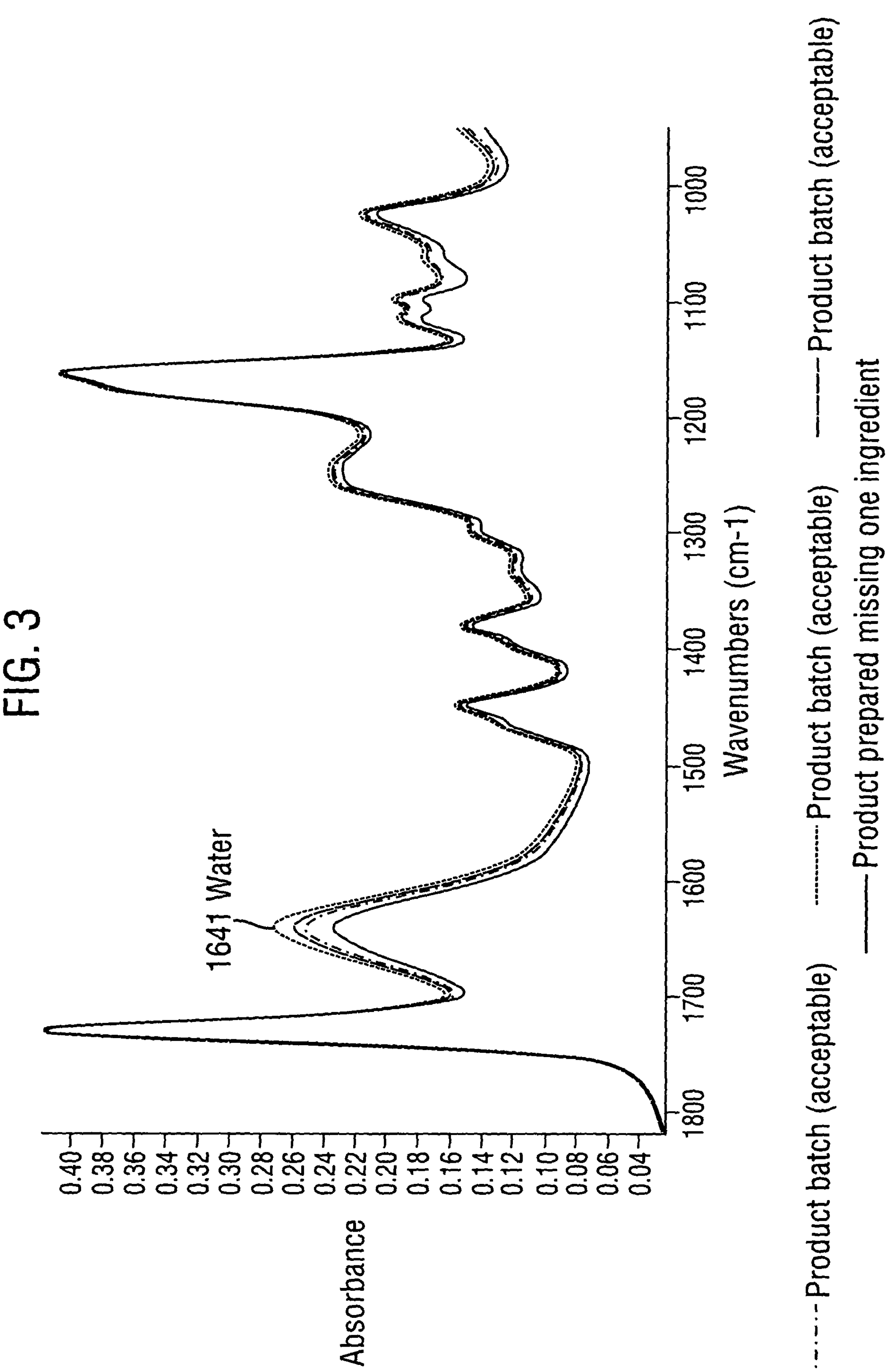
Absorbance
0.40
0.38
0.36
0.34
0.32
0.30
0.28
0.26
0.24
0.22
0.20
0.18
0.16
0.14
0.12
0.10
0.08
0.06
0.04
1800
1700
1641 Water
1600
1500
1400
1300
1200
1100
1000
Wavenumbers (cm-1)
Product batch (acceptable)
Product batch (acceptable)
Product batch (acceptable)
Product prepared missing one ingredient

FIG. 4

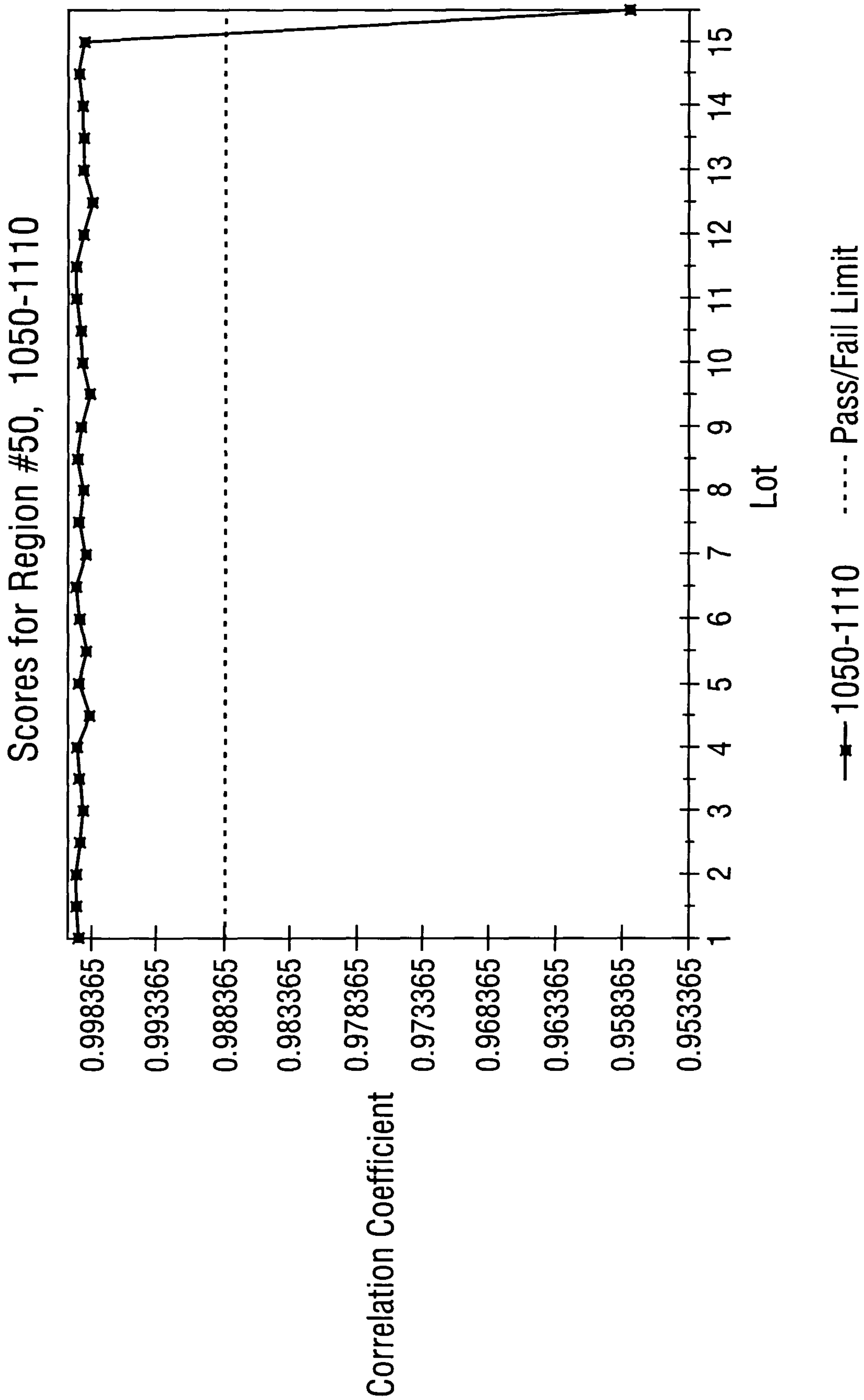
Scores for Region #50, 1050-1110
Correlation Coefficient
0.998365
0.993365
0.988365
0.983365
0.978365
0.973365
0.968365
0.963365
0.958365
0.953365
Lot
1
2
3
4
5
6
7
8
9
10
11
12
13
14
15
1050-1110
Pass/Fail Limit

FIG. 5

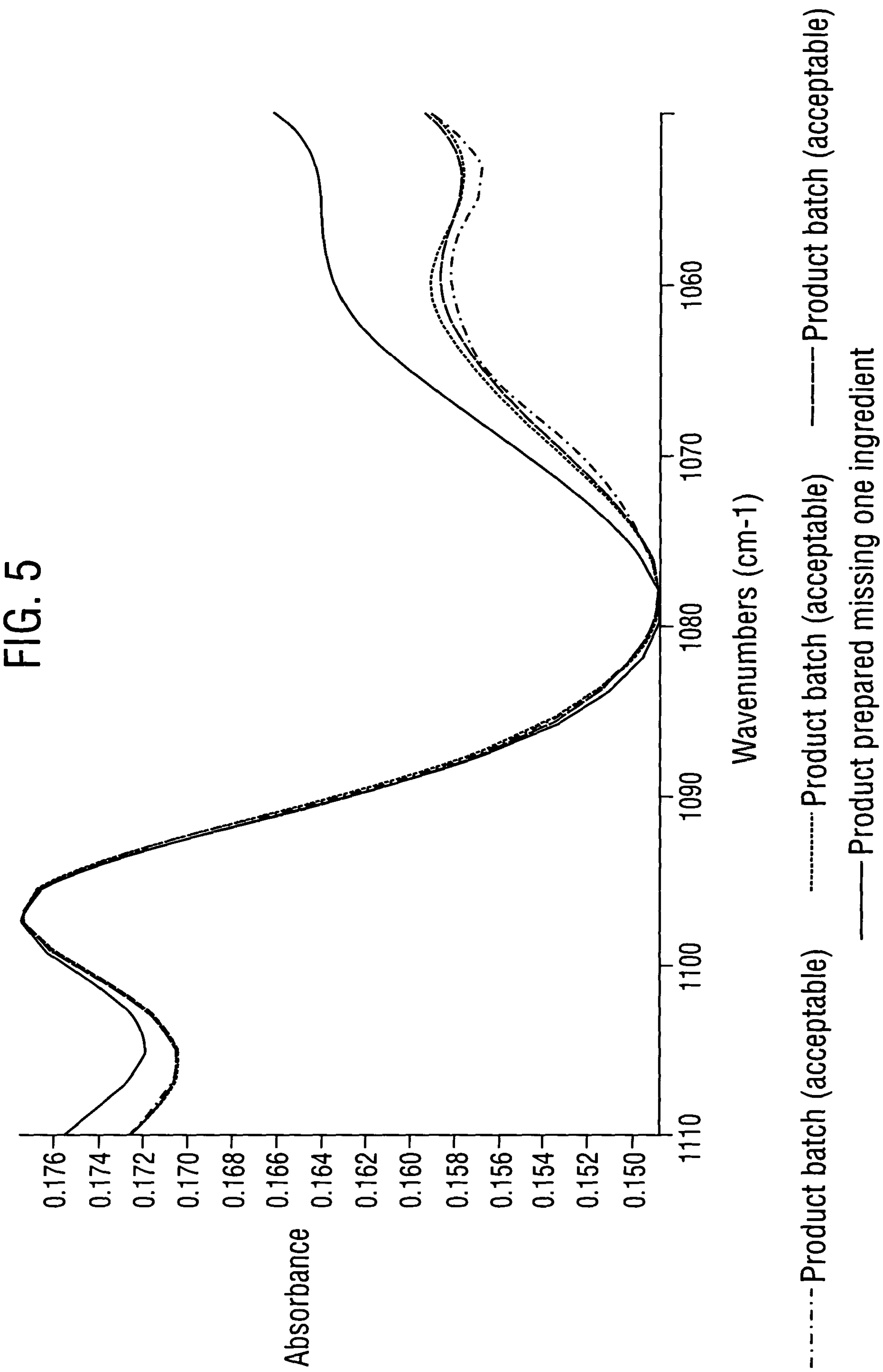
Absorbance
0.176
0.174
0.172
0.170
0.168
0.166
0.164
0.162
0.160
0.158
0.156
0.154
0.152
0.150
1110
1100
1090
1080
1070
1060
Wavenumbers (cm-1)
-·-·-·- Product batch (acceptable)
··········· Product batch (acceptable)
——— Product batch (acceptable)
——— Product prepared missing one ingredient

FIG. 6

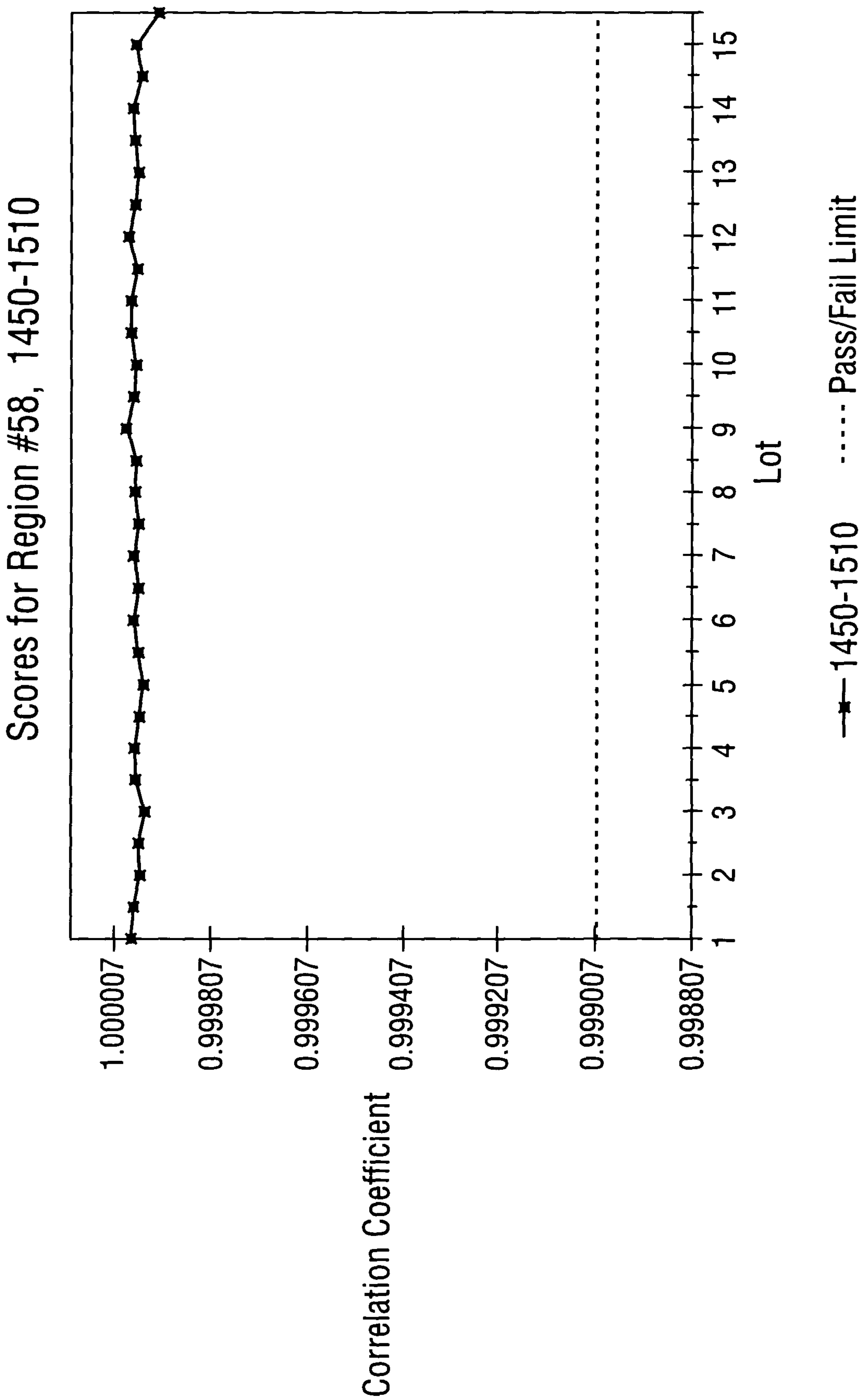
Scores for Region #58, 1450-1510
Correlation Coefficient
1.000007
0.999807
0.999607
0.999407
0.999207
0.999007
0.998807
1
2
3
4
5
6
7
8
9
10
11
12
13
14
15
Lot
1450-1510
Pass/Fail Limit

FIG. 7

Mahalanobis Distance from Normal Product by Principal Components Analysis

Distance

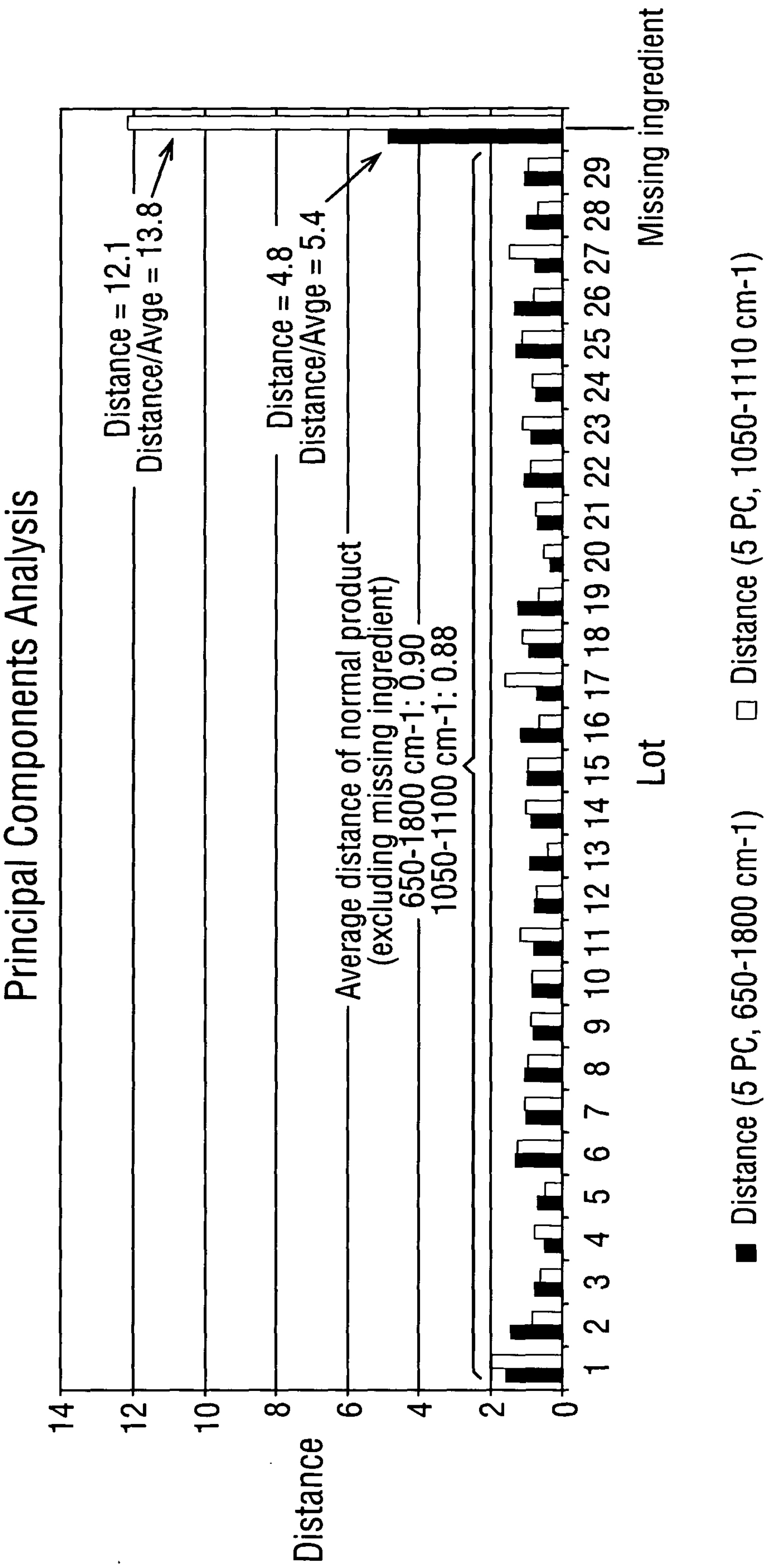

FIG. 8

RMS of Residual Spectra PCA with 2 Principal Components